# EUROPÄISCHE PATENTSCHRIFT

(11) **EP 4 182 560 B1**
(45) Veröffentlichungstag und Bekanntmachung des Hinweises auf die Patenterteilung: **06.08.2025**
(21) Anmeldenummer: 21736506.3
(22) Anmeldetag: 01.06.2021
(51) Int. Cl.: F04B 53/08, F04B 15/02, F04B 53/02, F04B 53/00, F04B 53/16, F16J 15/44, B01F 25/60, B01F 33/81

(54) **HOCHDRUCKHOMOGENISATOR**
HIGH-PRESSURE HOMOGENISER
HOMOGÉNÉISATEUR HAUTE-PRESSION

(30) Priorität: 05.06.2020 DE 102020003401
(43) Veröffentlichungstag der Anmeldung: 24.05.2023
(73) Patentinhaber: NETZSCH-Feinmahltechnik GmbH, 95100 Selb (DE)
(72) Erfinder: ENDERLE, Udo, 95659 Arzberg (DE); MOESCHL, Holger, 95100 Selb (DE); WEILAND, Lars-Peter, 95173 Schönwald (DE)
(74) Vertreter: Misselhorn, Hein-Martin
(86) Internationale Anmeldenummer: PCT/DE2021/000104
(87) Internationale Veröffentlichungsnummer: WO 2021/244689

(56) Entgegenhaltungen:
- WO-A1-2019/092020
- WO-A2-02/31386
- DE-A1- 102014 104 050
- DE-A1- 2 336 147
- DE-A1- 2 846 172
- DE-B1- 2 921 454
- US-A- 3 902 404
- US-A- 5 131 818

## Beschreibung

Die Erfindung betrifft einen Hochdruckhomogenisator für mit Partikeln beladene fließfähige Stoffe gemäß dem Oberbegriff des Anspruchs 1.

### TECHNISCHER HINTERGRUND

Beim Homogenisieren werden die Partikel einer Suspension möglichst gleichmäßig, also homogen, verteilt. Hierfür wird das zu homogenisierende Fluid in einem Homogenisator unter Druck durch eine Homogenisiereinheit gepumpt. In der Homogenisiereinheit werden Turbulenzen in Verbindung mit gezielten Scherkräften sowie Kavitation erzeugt, um agglomerierte Partikel innerhalb des zu homogenisierenden Fluids zu separieren.

Um das Fluid in die Homogenisiereinheit zu pumpen, werden häufig sogenannte Plungerpumpen eingesetzt. Plungerpumpen sind Verdrängerpumpen, bei denen die Kolbenstange, der sogenannte Plunger, selbst den Kolben darstellt. Der Kolben reicht nicht bis zur Zylinderwand. Daher bedarf es keiner Abdichtung zwischen der Mantelfläche des Kolbens und der Zylinderwand. Bei einer Plungerpumpe ist - im Regelfall am Eingang des Arbeitsraums - eine Dichtung zwischen dem Arbeitsraum und dem Plunger erforderlich.

### STAND DER TECHNIK

Um die Plungerpumpe im Betrieb vor einer Überhitzung zu schützen, ist es bekannt, eine Kühlung des Plungers vorzusehen. Untersuchungen hierzu haben bereits gezeigt, dass das zu homogenisierende Fluid zur Kühlung des Plungers verwendet werden kann.

Hierfür kann der Plunger durch eine Kühlkammer geführt werden. Da der Plunger hauptsächlich in dem Bereich, der sich während des Betriebs im Arbeitsraum befindet, erhitzt wird, sollte die Kühlkammer an den Arbeitsraum der Pumpe angrenzen. Dadurch wird eine Kühlung des Plungers nahe an der Wärmeentstehungszone gewährleistet. Es bietet sich an, als Kühlmittel das zu homogenisierende Fluid zu verwenden. Das Fluid wird dabei durch die Kühlkammer gepumpt, bevor es in den Arbeitsraum der Plungerpumpe gelangt. Dabei umströmt es den Plunger, wodurch dieser gekühlt wird. Ausgehend von der Kühlkammer wird das Fluid schließlich in den Arbeitsraum weitergeleitet.

Da im Arbeitsraum hohe Drücke erzeugt werden sollen, ist eine ausreichende Abdichtung des Arbeitsraums hin zur Umgebung, also auch zur Kühlkammer, erforderlich. In der Regel werden dafür Dichtungen verwendet, die in Kontakt mit dem Plunger stehen. Aufgrund der Bewegung des Plungers kommt es dabei zum Verschleiß der Dichtung, insbesondere beim Pumpen von mit Feststoff-Partikeln befrachteten Fluiden. Zudem sind derartige Dichtungen häufig aufwendig in der Montage, da sie in der Regel unter Vorspannung montiert werden müssen, um Relativbewegungen der Dichtung und dem die Dichtung umgebenden Gehäuse zu minimieren.

Die DE 10 2014 104 050 A1 beschreibt eine Homogenisiereinrichtung mit einer Hochdruck- und einer Niederdruckkammer. Die US 5 131 818 A beschreibt eine Hochdruckwasserpumpe. Die DE 23 36 147 A1 beschreibt eine Einrichtung zur Hydraulik-Kolbenabdichtung bei Hochdruck-Kolbenpumpen. Die WO 02/31386 A2 beschreibt eine fluidbewegende Vorrichtung mit einer Spaltdichtungsanordnung. Die US 3 902 404 A beschreibt eine Dichtungsanordnung für hin- und hergehende Kolben und Kolbenstangen. Die DE 29 21 454 B1 beschreibt eine Vorrichtung zum berührungslosen Dichten des Plungers im Zylinder einer Hochdruckpumpe oder Hochdruckkompressors. Die DE 28 46 172 A1 beschreibt eine berührungsfreie Dichtung für Kolbenpumpen, insbesondere Plungerkolbenpumpen.

### DAS DER ERFINDUNG ZUGRUNDE LIEGENDE PROBLEM

Angesichts dessen ist es die Aufgabe der Erfindung, einen Hochdruckhomogenisator anzugeben, mit dem sich der Verschleiß der zwischen Arbeitsraum und Kühlkammer befindlichen Dichtung reduzieren lässt.

### DIE ERFINDUNGSGEMÄSSE LÖSUNG

Erfindungsgemäß wird dieses Problem mit den Merkmalen des auf den Hochdruckhomogenisator gerichteten Hauptanspruchs gelöst.

Dementsprechend erfolgt die Lösung des Problems mit einem Hochdruckhomogenisator für mit Feststoffpartikeln (die hier gelegentlich verkürzt als "Partikel" bezeichnet werden) beladene fließfähige Stoffe mit wenigstens einer Hochdruckkammer und wenigsten einer, dieser fluidisch nachgeschalteten, Homogenisiereinheit. Die Homogenisiereinheit dient dazu, das zu homogenisierende Fluid, das meist eine Viskosität von 20 mPas und mehr hat und das zuvor in der mindestens einen Hochdruckkammer auf einen Druck von mehr als 500 bar gebracht worden ist, unter vollständiger oder im wesentlichen vollständiger Verwirbelung des Fluids zu entspannen. Dementsprechend ist die Homogenisiereinheit ausgestaltet.

Der Hochdruckhomogenisator weist zudem eine der Homogenisiereinheit zugeordnete Plungerpumpe auf, deren mindestens einer Plunger die Hochdruckkammer unter Druck setzt. Dabei besitzt der Hochdruckhomogenisator eine den Plungerschaft umgebende Niederdruckkammer zur Kühlung des Plungers. Die Niederdruckkammer führt einen Betriebsdruck von P_{N} ≤ 25 bar. Die Niederdruckkammer und die Hochdruckkammer sind dabei durch eine vom Plunger durchdrungene Dichtung voneinander getrennt. Der erfindungsgemäße Hochdruckhomogenisator zeichnet sich dadurch aus, dass die vom Plunger durchdrungene Dichtung ein Drosselspalt ist, der zwischen dem Plungerschaft und einer den Plungerschaft nicht (bzw. mangels spürbarem Nachteil nicht wesentlich) berührenden, vorzugsweise starren Buchse ausgebildet ist. Für die Länge L und radiale Ringspalthöhe S des Drosselspalts gilt S/L ≤ 0,0015. Mit dem Begriff der Länge L wird dabei in diesem Zusammenhang die sogenannte zylindrische Länge bezeichnet. Es handelt sich um die Länge, auf der der Ringspalt - abgesehen von den unvermeidlichen Formtoleranzen - zylindrisch ist, so dass die Ein- und Ausgangsbereiche des Spalts, die eine Fase oder einen Radius ausbilden, nicht mitgerechnet werden.

Mit der erfindungsgemäßen Ausgestaltung geht eine Reihe von Vorteilen einher.

Die vollständige oder im wesentlichen vollständige Entspannung des Fluids in der Homogenisiereinheit führt dazu, dass Ansammlungen von Feststoffpartikeln im Fluid voneinander getrennt und im Wesentlichen gleichmäßig im Fluid verteilt werden.

Der Vorteil der hier zum Speisen der Homogenisiereinheit verwendeten Plungerpumpe besteht gerade auch darin, dass sie Pulsationen in dem der Homogenisiereinheit zugepumpten Fluidstrom erzeugt, die die Homogenisierungswirkung weiter verbessern helfen. Die Plungerpumpe kann dabei entweder nur einen angetriebenen Plunger oder auch mehrere angetriebene Plunger - bevorzugt mit versetzten Totpunkten - umfassen. Letzteres hat in bestimmten Fällen den Vorteil, dass die Frequenz der Pulsationen steigt und dafür deren festigkeitskritische Amplitude verringert wird.

Der Vorteil einer mit mehreren Plungern ausgestatteten Plungerpumpe besteht darin, dass das zu homogenisierende Fluid nicht stoßartig, sondern kontinuierlich der Homogenisiereinheit zugeführt werden kann. Hierfür müssen die Plunger lediglich so angetrieben werden, dass sie ihren unteren Totpunkt jeweils zeitlich versetzt zu den anderen Plungern erreichen.

Da der Plungerschaft des mindestens einen Plungers durch die Niederdruckkammer der Plungerpumpe ragt, wird er von dem zu homogenisierenden Fluid umströmt. Dabei wird die während des Pumpvorgangs unvermeidliche Erwärmung des Plungers reduziert, was eine Steigerung der Leistungsfähigkeit der Pumpe mit sich bringt.

Die Dichtung zwischen Hochdruck- und Niederdruckkammer arbeitet jedenfalls im Wesentlichen, bevorzugt sogar vollständig, berührungslos.

Durch den unvermeidlichen Leckagestrom ist die Dichtung gut geschmiert. Die Leckage tritt je nach Viskosität des Fluids zumindest als Schleppleckage, im Regelfall jedoch als differenzdruckgetriebene Spaltleckage auf. Der Leckagestrom ist dabei unbedenklich, da der aus der Hochdruckkammer kommende Leckagestrom in der Niederdruckkammer gesammelt und schließlich wieder der Hochdruckkammer zugeführt wird.

Die Erfindung überwindet das Vorurteil, dass zur Abdichtung einer partikelbefrachteten Flüssigkeit eine Spaltdichtung mit sehr kleiner Spalthöhe nicht in Frage kommt, da bei der hier in Rede stehenden Druckdifferenz schon nach kurzer Zeit Probleme durch eine Akkumulation der mit dem Fluid in den Spalt eingetragenen Feststoffpartikel zu erwarten sind.

Überraschenderweise hat sich bei der hier in Rede stehenden Spaltauslegung gezeigt, dass im Regelfall keine schädliche Akkumulation von Feststoffpartikeln im Spalt auftritt. Durch die oszillierende Bewegung des Plungers in der Dichtung wird der Dichtspalt hinreichend gängig gehalten.

Anstatt des Begriffes "Hochdruckhomogenisator" kann auch der Begriff "Dispergierer" verwendet werden.

Der Begriff "Plunger" bezeichnet einen Kolben, der von der Kolbenstange gebildet wird.

Der Begriff "Hochdruckkammer" bezeichnet den Arbeitsraum der Plungerpumpe.

Der Begriff "Kühlkammer" bezeichnet den Niederdruckraum der Plungerpumpe.

Die Bezeichnung "berührungslos arbeitende Dichtung" bezieht sich hierbei auf die Berührung der Buchse der Hochdruckdichtung mit der Mantelfläche des Plungers. Eine Berührung der Hochdruckdichtung mit anderen Bestandteilen der Plungerpumpe wird dabei nicht ausgeschlossen.

Die Bezeichnung "fluidisch nachgeschaltete Homogenisiereinheit" beschreibt, dass das zu homogenisierende Fluid von der Hochdruckkammer aus hin zur Homogenisiereinheit fließt.

### BEVORZUGTE AUSGESTALTUNGSMÖGLICHKEITEN

Es besteht eine Reihe von Möglichkeiten, die Erfindung so auszugestalten, dass ihre Wirksamkeit oder Brauchbarkeit noch weiter verbessert wird.

So ist es besonders bevorzugt, dass die - ohne Einbeziehung der stirnseitigen Fasen oder Rundungen zu berechnende - zylindrische Länge L des Drosselspalts mindestens 2/3 des Durchmessers des Plungers beträgt. Idealerweise entspricht die zylindrische Länge mindestens dem gesamten Durchmesser des Plungers.

Durch eine solche Spaltlänge wird eine Drosselung der Fließgeschwindigkeit des Leckagestroms gewährleistet. Dadurch wird nicht nur sichergestellt, dass keine zu große Leckagemenge in die Niederdruckkammer strömt, sondern es werden auch Probleme wie beispielsweise das Verschäumen beim Eintritt der Leckage in die Niederdruckkammer verhindert.

In einer weiteren bevorzugten Ausführungsform beträgt die Ringspalthöhe des Drosselspalts maximal 0,03 mm. Um das näher zu veranschaulichen, sei gesagt, dass es bei besonders bevorzugten Ausführungsformen der Erfindung so ist, dass die Buchse (bei Berücksichtigung ihrer Toleranz) einen lichten Innendurchmesser von 20 mm + 0,009 mm haben sollte und der Plunger (bei Berücksichtigung seiner Toleranz) einen maximalen Außendurchmesser von 20 mmm - 0,02 mm haben sollte, zwingend ist das derzeit aber nicht.

Untersuchungen mit derartigen Spalthöhen haben zu guten Ergebnissen hinsichtlich des Wirkungsgrades der Pumpe geführt.

Idealerweise geht die Stirnseite der Buchse auf ihrer der Hochdruckkammer zugewandten Seite über eine Fase in die Innenmantelfläche der Buchse über. Die Fase ist bevorzugt als Flachfase mit einem Fasenwinkel von um bzw. genau 30° oder weniger ausgeführt, gemessen gegenüber der Längsachse des Plungers. Eine solche Flachfase verhindert bzw. reduziert das harte Anstoßen des Kolbens an die Buchsenwand in Fällen, in denen der Plunger im Betrieb aus seiner Mittenposition geht.

Als ganz besonders günstig hat sich das Anbringen einer abgewinkelten Fase erwiesen. Eine solche Fase besteht auf ihrer der Hochdruckkammer zugewandten Seite aus einem ersten steileren Abschnitt, der etwa einen Winkel von 45° zur Längsachse der Buchse einschließt. An diesen ersten Abschnitt schließt sich auf der dem Dichtspalt zugewandten Seite ein zweiter Fasenabschnitt mit einem flacheren Fasenwinkel an, mit einem Fasenwinkel von bevorzugt um bzw. genau 30° oder weniger. Eine derart gestaltete Fase hält die Feststoffpartikel bestmöglich vom Dichtspalt fern.

Idealerweise geht die Stirnseite der Buchse (auch) auf ihrer dem Plungerantrieb zugewandten Seite über eine Fase in die Innenmantelfläche der Buchse über. Diese Fase wird meist steiler ausgebildet sein als ihr Pendant auf der Seite der Hochdruckkammer.

Da die zwischen dem Plunger und der Buchse ausgebildete Spalthöhe sehr gering ist, besteht bei der Montage des Plungers die Gefahr einer Beschädigung der Buchse. Ein Radius oder eine Schräge bzw. Fase an der Stirnseite der Buchse, von der aus der Plunger in die Buchse eingeführt wird, reduziert die Gefahr einer Beschädigung.

Gerade durch eine Flachfase wird die zeitweilige Ausbildung einer die Leckage weiter verringernden, da ihr entgegengesetzten Schleppwirkung hin zur Hochdruckkammer begünstigt, sobald sich der Plunger tiefer in die Hochdruckkammer hineinbewegt.

Alternativ zur Fase kann an der betreffenden Stelle der Buchse ein Radius r vorgesehen sein.

Die "dem Plungerantrieb zugewandte Seite" bezeichnet dabei die zum Antriebskolben hin ausgerichtete Seite.

Vorzugsweise bestehen die Buchse und der Plunger aus Materialien mit unterschiedlichen Wärmeausdehnungskoeffizienten.

Die Wärmeausdehnungskoeffizienten sind dabei idealerweise mehr als nur unwesentlich unterschiedlich voneinander. Bestehen beispielsweise der Plunger aus Keramik und die Buchse aus Stahl, führt dies zu einer Selbstregulierung des Dichtspalts. Bei ungünstigen Reibungsverhältnissen, die beispielsweise durch einen übermäßigen Partikeleintrag in den Spalt hervorgerufen werden, entsteht Reibungswärme im Spalt. Durch die Reibungswärme in Verbindung mit den unterschiedlichen Wärmeausdehnungskoeffizienten von Buchse und Plunger wird der Dichtspalt dabei tendenziell größer. Dies führt dazu, dass der Spalt wieder freigespült wird, wodurch der mit der Reibung einhergehenden, potentiellen Gefahr einer Beschädigung entgegengewirkt wird.

In einer weiteren bevorzugten Ausführungsform besteht der Plunger aus keramischem Material.

Dies ist von Vorteil, da keramische Werkstoffe eine hohe Beständigkeit gegenüber Verschleiß, Wärme und Druck aufweisen.

Dabei wird der Plunger bevorzugt aus Massivkeramik gefertigt.

In einer weiteren bevorzugten Ausführungsform besteht die Buchse aus Lagermetall.

Auf diese Art und Weise wird verhindert, dass gelegentlich auftretender unmittelbarer Reibkontakt zwischen der Mantelfläche des Plungers und der Innenoberfläche der Buchse (etwa im Zuge von Anfahrvorgängen oder unter dem Einfluss von Fluidpulsationen)zu Beschädigungen führt.

Als besonders vorteilhaft kommt hinzu, dass die Kombination aus der Buchse und dem Plunger so gewählt werden kann, dass sie unterschiedliche Prozesstemperaturen kompensieren kann, im Wesentlichen oder jedenfalls partiell. Das sei anhand folgenden Beispiels erläutert: Steigt die Prozesstemperatur, dann steht das zu homogenisierende Fluid mit höherer Temperatur an. Es wird tendenziell dünnflüssiger. In einem sehr engen Dichtspalt zwischen der Buchse und dem Plunger könnten dadurch Schmierungsprobleme und womöglich sogar ein Fressen auftreten. Dem wirkt es entgegen, wenn der Dichtspalt durch die Paarung aus unterschiedlichen Materialien der Buchse und des Plungers nun seine Spalthöhe derart ändert, dass die Schmierung verbessert wird.

In manchen Fällen ist es eine gute Option, wenn die Buchse so gestaltet und gelagert ist, dass sie sich bei steigender Temperatur stärker ausdehnt als der Plunger. Die Ausdehnung erfolgt dabei derart, dass sich die Höhe des Dichtspalts vergrößert. Umgekehrt kann es in anderen Anwendungsfällen sinnvoll sein, die Materialien für die Buchse und den Plunger so zu paaren, dass der Dichtspalt bei steigender Temperatur kleiner wird.

Dadurch wird, wie bereits beschrieben, der Dichtspalt vor einer Beschädigung aufgrund von Partikelansammlungen im Dichtspalt geschützt.

Idealerweise sind die Längsachsen der Buchse und des sich in der Buchse hin und her bewegenden Plungerschafts durchgängig parallel oder vorzugsweise koaxial ausgerichtet.

Dadurch wird eine gleichmäßige Spalthöhe des Dichtspalts zwischen der Buchse und der Mantelfläche des Plungerschafts gewährleistet.

Es ist günstig, jeden Plunger mittels eines eigenen, nur ihm zugeordneten Antriebskolbens anzutreiben, der wiederum von einer Kurbelwelle angetrieben wird. Die Antriebskolben sind dabei über Hublager mit der Kurbelwelle verbunden, wobei die Hublager in unterschiedlichen Winkeln um die Drehachse der Kurbelwelle herum angeordnet sind. Ein Antriebskolben übernimmt demzufolge die Rolle eines Pleuels.

In einer weiteren bevorzugten Ausführungsform ist der Plunger über eine Kreuzgelenkkupplung mit dem ihn antreibenden Antriebskolben verbunden.

Dadurch wird eine Übertragung der Bewegung des Antriebskolbens auf den Plunger bei gleichzeitiger Schwenkbarkeit von Antriebskolben und Plunger relativ zueinander ermöglicht. Durch die Schwenkbarkeit des Antriebskolbens relativ zum Plunger wird der Plunger lediglich mit Axialkräften beaufschlagt und bleibt frei von Kräften, die radial in Richtung der Buchse wirken. Die Bewegung des Plungers bleibt demnach geradlinig und im Wesentlichen parallel zur Längsachse der Buchse.

Idealerweise ist die antriebsseitige Stirnseite des Plungers oder die die Antriebsdruckkräfte auf diese übertragende Stirnseite des Antriebskolbens konvex gekrümmt.

Durch eine Krümmung der einander zugewandten Stirnseiten des Plungers und des Antriebskolbens können diese aneinander anliegen, ohne die Schwenkbarkeit des Antriebskolbens relativ zum Plunger zu blockieren.

### FIGURENLISTE

Fig. 1: Schematische Darstellung eines erfindungsgemäßen Hochdruckhomogenisators
Fig. 2: Isometrische Ansicht des Ausschnitts der Plungerpumpe (ohne Hochdruckkammer)
Fig. 3: Vergrößerter Ausschnitt aus der Fig. 2
Fig. 4: Draufsicht auf die Plungerpumpe (bei abgenommener Hochdruckkammer)
Fig. 5: Schnittansicht A eines ersten Ausführungsbeispiels der Plungerpumpe, das nicht unter den Wortlaut der Ansprüche fällt
Fig. 6: Schnittansicht B eines ersten Ausführungsbeispiels der Plungerpumpe
Fig. 7: Teilschnittansicht des ersten Ausführungsbeispiels gem. der Fig. 5 und 6
Fig. 8: Schnittansicht A eines zweiten Ausführungsbeispiels der Plungerpumpe mit radialbeweglich gehaltener Buchse, das nicht unter den Wortlaut der Ansprüche fällt
Fig. 8a und b: Veranschaulichung der prinzipiellen Beweglichkeit der Buchse mit zylindrischer Außenumfangsfläche
Fig. 8c und d: Veranschaulichung der prinzipiellen Beweglichkeit der Buchse mit balliger Außenumfangsfläche
Fig. 9: Schnittansicht A eines dritten Ausführungsbeispiels der Plungerpumpe, das nicht unter den Wortlaut der Ansprüche fällt
Fig. 10: Schnittansicht A eines vierten und eines fünften Ausführungsbeispiels der Plungerpumpe, die nicht unter den Wortlaut der Ansprüche fallen
Fig. 11:
   Detailansicht einer erfindungsgemäßen Buchse

### AUSFÜHRUNGSBEISPIELE

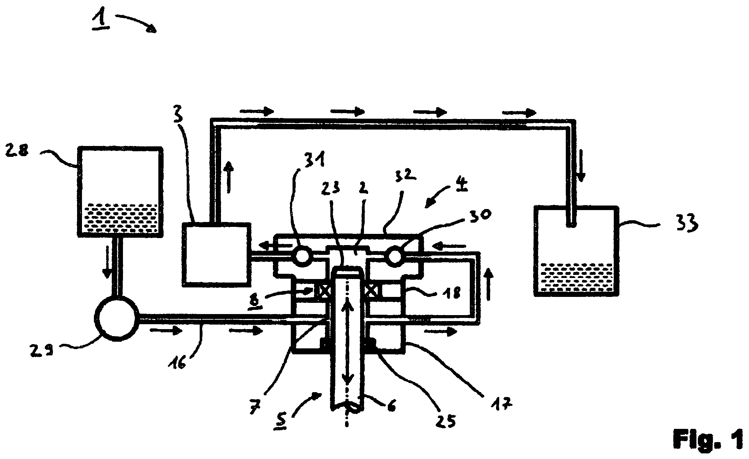

Die Funktionsweise des Hochdruckhomogenisators wird im Folgenden anhand der Figuren 1-10 erläutert.

Die grundlegende Funktionsweise des Hochdruckhomogenisators 1 lässt sich gut anhand der schematischen Darstellung in Fig. 1 erkennen.

Das zu homogenisierende Fluid befindet sich zunächst im Produktvorratsbehälter 28. Von dort aus wird es mit Hilfe der Förderpumpe 29 über die Leitungen 16 erst in die Niederdruckkammer 7 und anschließend in die Hochdruckkammer 2 gefördert.

In der Hochdruckkammer 2 wird durch das Eindringen des Plungers 5 ein Überdruck erzeugt. Dieser Überdruck hat zur Folge, dass das Einlassventil 30 geschlossen und das Auslassventil 31 geöffnet wird. Anschließend wird der Plunger 5 wieder aus der Hochdruckkammer 2 herausgezogen, jedoch nur so weit, dass die Stirnseite 23 des Plungers 5 sich weiterhin innerhalb der Hochdruckkammer 2 befindet. Dabei wird ein Unterdruck in der Hochdruckkammer erzeugt. Dieser Unterdruck hat das Schließen des Auslassventils 31 und das Öffnen des Einlassventils 30 zur Folge, so dass wieder Flüssigkeit in die Hochdruckkammer 2 strömen kann.

Die Hochdruckkammer 2 wird von der im Gehäuse 18 befindlichen Dichtung 8 gegenüber der Umgebung und der Niederdruckkammer 7 abgedichtet. Die Dichtung 8 ist dabei so angeordnet, dass sie den Plunger 5 umgibt. Gegenüber dem lichten Innenquerschnitt der Dichtung 8 beträgt das Untermaß bevorzugt 0,015 mm bis 0,03 mm, idealerweise rund 0,02 mm. Das führt zu einer radialen Spalthöhe S von 0,075 mm bis 0,015 mm. Diese sollte vorzugsweise auf einer Dichtspalt-Länge L entlang der Plungerlängsachse anzutreffen sein, die zumindest 2/3 des Plungerdurchmessers entspricht. Erfindungsgemäß gilt dabei, dass das Verhältnis S/L ≤ 0,0015 mm ist.

Der Plunger 5 wird mit seinem Plungerschaft 6 durch das Gehäuse 17 und die darin befindliche Niederdruckkammer 7 geführt. Das zu homogenisierende Fluid umströmt demnach in der Niederdruckkammer 7 den Plungerschaft 6, wodurch dieser gekühlt wird. Die Abdichtung der Niederdruckkammer 7 gegenüber der Umgebung erfolgt dabei über die Niederdruckdichtungsanordnung 25.

Idealerweise sind mehrere Plunger 5 in Reihe geschaltet. Dabei werden die einzelnen Plunger 5 idealerweise jeweils so angesteuert, dass sie ihren unteren Totpunkt nicht zeitgleich, sondern zeitlich versetzt erreichen.

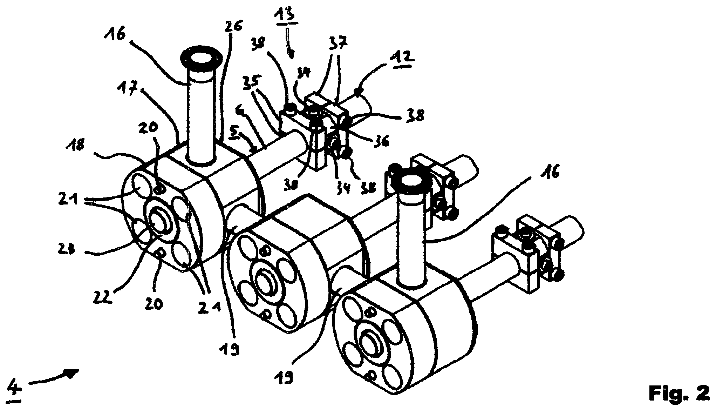

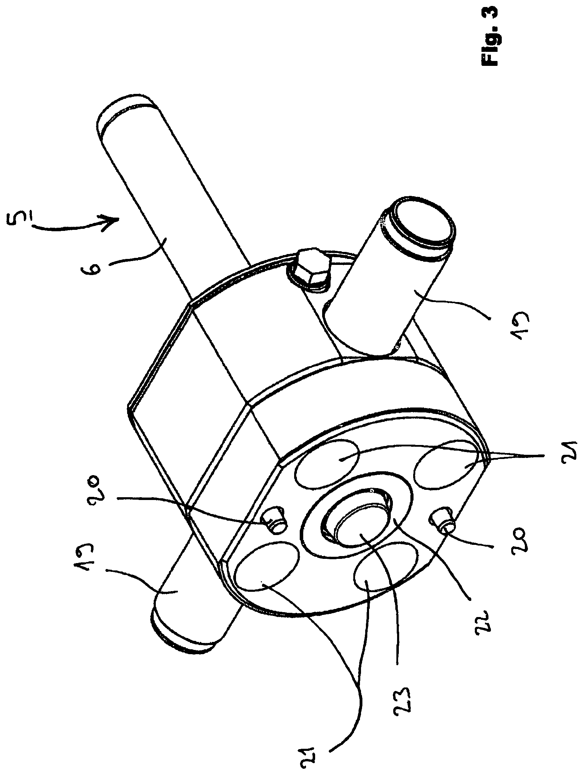

Eine solche Plungerpumpe 4 wird in den Fig. 2 und 3 gezeigt. Die Hochdruckkammer 2 bzw. das die Hochdruckkammer 2 bildende Gehäuse 32 wird dabei nicht dargestellt.

Aus Gründen der Übersichtlichkeit werden die einzelnen Bestandteile der Plungerpumpe 4 nur anhand eines Plungers 5 und den dazugehörigen Elementen der Plungerpumpe 4 mit Bezugszeichen versehen.

Jeder Plunger 5 der Plungerpumpe 4 wird von je einem Antriebskolben 12 angetrieben. Der Antriebskolben 12 und der Plunger 5 sind dabei über eine radialflexible Kupplung etwa in Gestalt eines hier nicht im Einzelnen erläuterten Kreuzgelenks 13 miteinander verbunden.

Der Plunger 5 ragt durch den Gehäusedeckel 26, das die Niederdruckkammer 7 umgebende bzw. bildende Gehäuse 17 sowie das die Hochdruckdichtung 8 umgebende Gehäuse 18 hindurch. An das die Hochdruckdichtung 8 umgebende Gehäuse 18 schließt der die Hochdruckkammer 2 bildende, zwar nicht in dieser Fig. 2, aber in Fig. 1 dargestellte, Gehäuseteil 32 an.

Um die einzelnen Gehäuseteile miteinander zu verbinden, sind die Bohrungen 21 für Befestigungsschrauben vorgesehen. Zur exakten Positionierung des Gehäuseteils 32 am Gehäuseteil 18 sind zudem jeweils zwei oder mehrere Passstifte 20 am Gehäuseteil 18 angebracht.

Die einzelnen Niederdruckkammern 7 sind über die Verbindungsleitungen 19 miteinander verbunden. Das zu homogenisierende Fluid wird also über einen Zulauf 16 in eine der Niederdruckkammern 7 transportiert und fließt von da aus über die Verbindungsleitungen 19 durch die anderen Niederdruckkammern 7. Über den Ablauf 16 wird das Fluid schließlich aus der letzten Niederdruckkammer 7 herausgeleitet. Von dort aus fließt es über eine nicht dargestellte Leitung in die ebenfalls nicht dargestellten Hochdruckkammern 2.

Um einen Plunger 5 mit einem Antriebskolben zu verbinden, ohne dass der Plunger durch die Kraftwirkung des Antriebskolbens gegenüber der Buchse, mit der er die Spaltdichtung ausbildet, verkippt wird, kommt, wie schon kurz angesprochen, idealerweise eine radialflexible Kupplung zum Einsatz. Näheres hierzu wird an späterer Stelle ausgeführt.

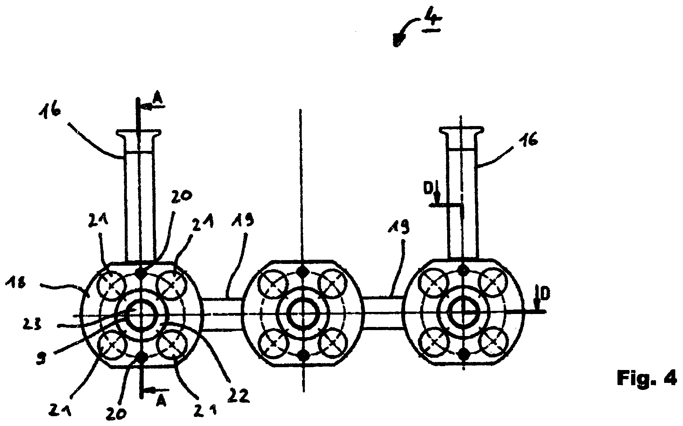

In Fig. 4 wird die Anordnung der Plungerpumpe 4 in der Untersicht dargestellt. In dieser Ansicht wird gezeigt, wie die Schnittlinien A-A und D-D durch die Plungerpumpe 4 verlaufen.

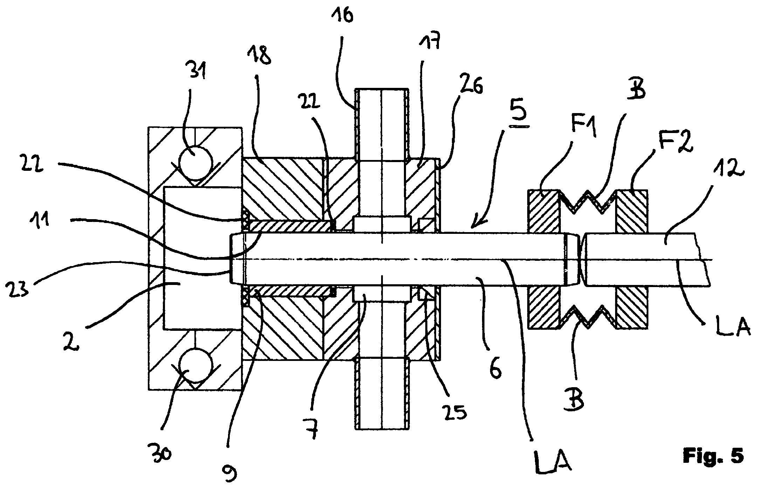

Die Schnittansicht des Schnittes A-A wird in Fig. 5 dargestellt. Die Hochdruckkammer 2 wird dabei schematisch angedeutet.

Die Hochdruckdichtung 8 zum Abdichten der Hochdruckkammer 2 besteht aus zwei Flachdichtungen 22 sowie einer ersten Buchse 9. Eine der Flachdichtungen 22 grenzt unmittelbar an die Hochdruckkammer 2 an, während die zweite Flachdichtung 22 an das Gehäuse 17 anliegt. Die Flachdichtungen sind aber nur Nebenabdichtungen für die Buchsen 9 und 24. Zwischen den beiden Flachdichtungen 22 ist die den Plungerschaft 6 umgebende Buchse 9 angeordnet und axial gehalten.

Bei diesem Ausführungsbeispiel sitzt die Buchse 9 direkt im umliegenden Gehäuse fest, starr. In manchen Fällen erfolgt der Einbau so, dass die Buchse in radial einwärtiger Richtung mit einem Druck vorspannt wird, der die gleiche Größenordnung hat wie der Druck, der später im Dichtspalt angreift und in radial auswärtiger Richtung wirkt.

Zwischen der Buchse 9 und der Mantelfläche des Plungerschaftes 6 wird ein in Fig. 5 nicht erkennbarer radialer Dichtspalt gebildet. Durch den Dichtspalt kann eine geringe Menge des in der Hochdruckkammer 2 befindlichen zu homogenisierenden Fluids in Richtung der Niederdruckkammer 7 entweichen. Aufgrund des Verhältnisses zwischen Dichtspalthöhe und Dichtspaltlänge fällt der Druck im Dichtspalt kontinuierlich auf den Druck der Niederdruckkammer 7 ab, die typischerweise einen Überdruck im Bereich von 3 bar führt. Meist ist es so, dass der hier anzutreffende Überdruck nicht oberhalb von 6 bar liegt. Das Verhältnis zwischen Dichtspalthöhe und Dichtspaltlänge ist so gewählt, dass die Leckagemenge verringert wird und dabei aber groß genug ist, um Reibungsprobleme mit den eventuell in den Dichtspalten eingetragenen Partikeln, die die Flüssigkeit führt, zu verhindern.

Die Buchse 9 weist an ihrer dem Antriebskolben 12 zugewandten Stirnseite 10 eine Schräge 40 bzw. eine Fase oder einen Radius auf, über die oder den die Stirnseite in die Innenmantelfläche übergeht. Hierdurch soll verhindert werden, dass die Kante der Stirnseite abplatzt, wenn es im Betrieb zum stoßartigen Kontakt mit dem Plunger kommt. Komplementär kann der Plunger 5 mit einer Fase versehen sein.

Im Gehäuse 17 befindet sich die Niederdruckkammer 7, durch welche das zu homogenisierende Fluid fließt und dabei den Plunger 5 kühlt, bevor es der Hochdruckkammer 2 zugeführt wird. Die Niederdruckkammer 7 wird gegenüber der Umgebung von der Niederdruckdichtungsanordnung 25 abgedichtet.

Die wesentlichen technischen Gesichtspunkte einer geeigneten radialflexiblen Kupplung illustriert die Fig. 5 ebenfalls.

Wie man sieht, werden der Plunger 5 und der Antriebskolben 12 jeweils durch eine nicht näher gekennzeichnete Verbindung gehalten. Die beiden Verbindungen F1 und F2 verleihen dem Plunger 5 und dem Antriebskolben 12 im Regelfall eine definierte Verschwenkbarkeit zueinander. Die Verbindung überträgt, wie man sieht, die Rückhubbewegung des Antriebskolbens 12 auf den Plunger 5.

Eine der Stirnflächen des Plungers 5 bzw. des Antriebskolbens 12 ist konvex ausgeführt. Bevorzugt ist das die Stirnfläche des Antriebskolbens. Typischerweise besteht er aus dem weicheren Material.

Auf diese Art und Weise kann der Antriebskolben 12 um bestimmte Beträge auf dem Plunger 5 "abwälzen". Eventuell vom Antriebskolben 12 vollführte Schwenk- oder Seitbewegungen werden so nicht auf den Plunger 5 übertragen, so dass der Dichtspalt möglichst ungestört bleibt. Das ist gerade dann von Bedeutung, wenn die Buchse 9 radial im Wesentlichen unbeweglich in das sie umgebende Gehäuseteil 18 eingebaut ist, so wie das die Fig. 5 zeigt.

Mit anderen Worten gesagt ist es also so, dass die erforderliche Druckkraft beim Hineinbewegen des Plungers 5 in die Hochdruckkammer 2 von dem Antriebskolben 12 auf den Plunger 5 übertragen wird. Um zu gewährleisten, dass die Längsachsen des Plungers 5 und der Buchse 9 während des Pumpvorgangs stets koaxial verlaufen, ist die schon zuvor angesprochene radialflexible Kupplung verbaut. Anzumerken ist noch, dass die Zugkraft, die den Plunger 5 nach dem Erreichen seines unteren Totpunktes wieder in Richtung des Antriebskolbens 12 bewegen soll, vom Antriebskolben 12 ebenfalls über die radialflexible Kupplung 13 auf den Plunger 5 übertragen wird.

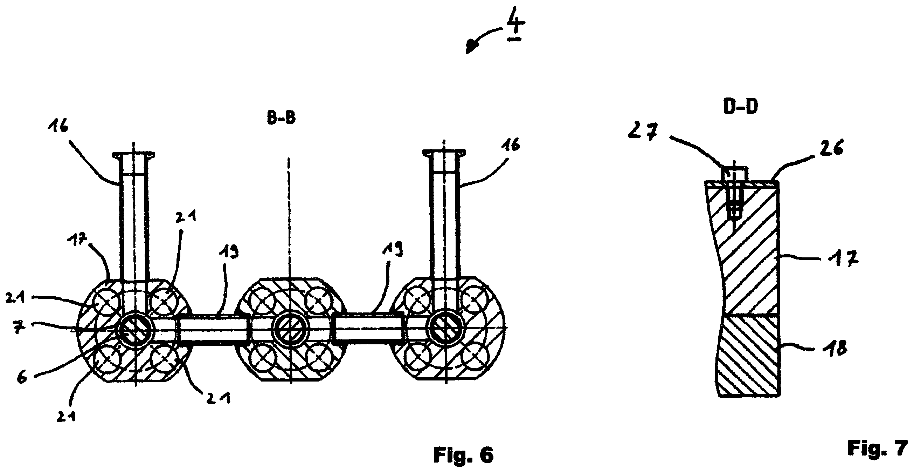

Anhand des in Fig. 6 gezeigten Schnittes B-B lässt sich erkennen, wie die Niederdruckkammern 7 über die Verbindungsleitungen 19 miteinander verbunden sind.

Anhand des in Fig. 7 gezeigten Schnittes D-D lässt sich erkennen, wie der Gehäusedeckel 26 an dem die Niederdruckkammer 7 umgebenden Gehäuseteil 17 mittels Fixierschrauben 27 befestigt ist.

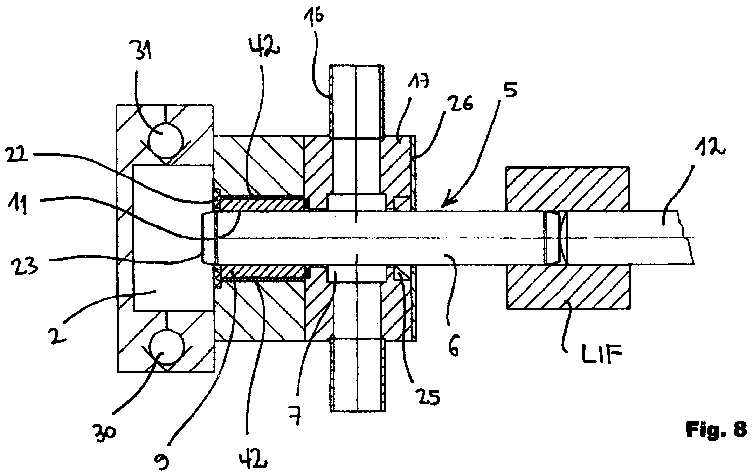

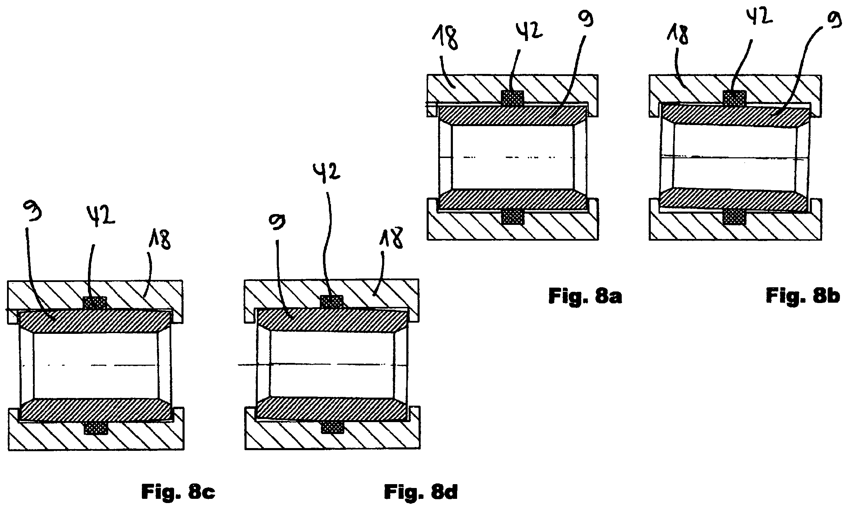

Die Fig. 8 zeigt ein zweites Ausführungsbeispiel der Erfindung.

Das zuvor zum ersten Ausführungsbeispiel Gesagte gilt hier sinngemäß, sofern sich nicht durch den nachfolgend geschilderten Unterschied explizit etwas anderes ergibt.

Der erste Unterschied zum ersten Ausführungsbeispiel liegt hier darin, dass die an der Ausbildung des Dichtspalts beteiligte Buchse 9 schwimmend gelagert ist. Zu diesem Zweck ist an ihrem Außenumfang - zumindest abschnittweise, besser vollständig - eine Lagermanschette 42 aus mehr als nur unwesentlich kompressiblem Material vorgesehen, idealerweise aus einem Weichelastomer oder Gummi. Die radiale Wandstärke der Lagermanschette 42 ist typischerweise kleiner als die der Buchse 9, typischerweise um mindestens den Faktor 2. Bei alledem kann der Außenmantel der Buchse 9 auch ballig statt idealzylindrisch sein. Das erleichtert die Schwenkbeweglichkeit der Buchse 9 unter Verformung der Lagermanschette 42.

Die Lagermanschette 42 kann ein diskretes Bauteil in Gestalt einer Sleeve oder ein oder mehreren Ringen sein oder eine in situ verfestigte Vergussmasse bzw. ein in situ vulkanisierter Gummikörper.

Eine so geartete Lagermanschette 42 erlaubt es der Buchse 9, sich im Betrieb um einen bestimmten Betrag radialtranslatorisch zu verlagern oder zu verschwenken. Dadurch kann sie sich so auf den Plunger 5 einstellen, dass die Geometrie des Dichtspalts optimiert wird, unter dem Gesichtspunkt der Abdichtungsqualität bzw. der Dichtungslebensdauer.

Zu dieser Verschwenkbarkeit tragen auch die die Nebenabdichtung sicherstellenden, elastomeren Dichtringe 22 bei, die gegen die Stirnenden der Buchse 9 anliegen. Anders als starre Halteringe oder Beilagscheiben, klemmen sie die Stirnflächen nicht so zwischen sich ein, dass die Buchse 9 hierdurch an einer eventuellen Schwenkbewegung gehindert wird.

Wie man sich das Einstellen des Dichtspalts durch Verschwenkung der Buchse 9 vorstellen kann, das zeigen die Fig. 8a und b anhand einer Buchse mit zylindrischer Außenumfangsfläche, und die Fig. 8c und d zeigen anhand einer Buchse mit balliger Außenumfangsfläche, wie das Verschwenken der Buchse vonstatten geht.

Zurückgekehrt zu Fig. 8 erkennt man, dass der zweite, vom bisher Gesagten unabhängige Unterschied darin liegt, dass der Antriebskolben 12 und der Plunger 5 hier nicht über eine radial-flexible Kupplung miteinander verbunden sind, wie sie zuvor die Fig. 5 gezeigt hat, sondern über eine starre Kupplung. Das hat seinen Grund darin, dass es in diesem Fall nicht zwingend notwendig ist, die eventuellen Kippbewegungen des Antriebskolbens vom Plunger 5 fernzuhalten. Diese Notwendigkeit besteht deshalb nicht, weil bei diesem Ausführungsbeispiel die Buchse 9 die Möglichkeit hat, sich aufgrund ihrer flexiblen Lagerung an die aktuelle Lage des Plungers 5 anzupassen, vgl. nochmals Fig. 8. Auch hierdurch kann verhindert werden, dass vom Antriebskolben störende Querkräfte übertragen werden, die die Ausbildung der Spaltgeometrie beeinträchtigen.

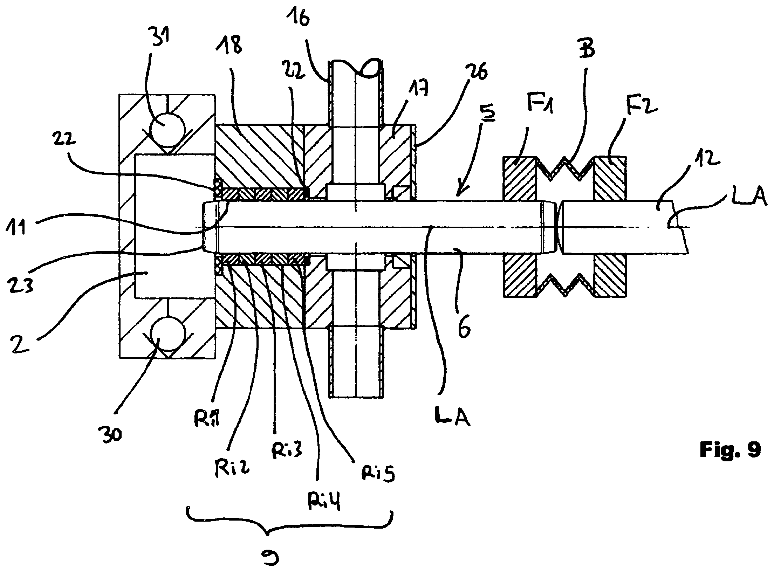

Die Fig. 9 zeigt ein drittes Ausführungsbeispiel der Erfindung.

Das zuvor zum ersten Ausführungsbeispiel Gesagte gilt hier sinngemäß, sofern sich nicht durch den nachfolgend geschilderten Unterschied explizit etwas anderes ergibt.

Der im Regelfall einzige Unterschied zum ersten Ausführungsbeispiel liegt hier darin begründet, dass die Buchse 9 nun mehrteilig ausgebildet ist. Sie besteht nun etwa aus mehreren, idealerweise drei, besser mindestens vier bis acht unmittelbar hintereinander und in unmittelbarem Kontakt miteinander eingebauten Ringen Ri1 bis Ri5. Die Ringe sind bei diesem Ausführungsbeispiel fest im die Hochdruckdichtung umgebenden Gehäuseteil 18 eingebaut. Die Aufteilung in einzelne Ringe erleichtert den Ein- und Ausbau bei Wartungsarbeiten erheblich.

In manchen Anwendungsfällen kann es zudem sehr vorteilhaft sein, einen sich zwischen benachbarten Ringen Ri1 bis Ri5 mehr als nur unwesentlich ändernden, abgestuften Spalthöhenverlauf zu verwirklichen. So ist zum Beispiel denkbar, den ersten, unmittelbar der Hochdruckkammer 2 zugewandten Ring mit einer geringeren Dichtspalthöhe auszuführen als alle oder ein Teil der nachfolgenden Ringe. Auf diese Art und Weise erhält man die Option, das zumindest übermäßige Eindringen von Partikeln in den eigentlich auf seiner übrigen Länge mit einer größeren Spalthöhe ausgestatteten Dichtspalt zu verhindern.

Eine weitere Option bei diese Lösung ist die, dass der besagter erste Ring Ri1 eine Opferfunktion verwirklicht: Da er die geringste Dichtspalthöhe hat, bricht er eingedrungene Partikel. Er selbst erfährt dabei erhöhten abrasiven Verschleiß. Dafür sinkt aber der Verschleiß, den die gebrochenen/vorzerkleinerten Partikel an den anderen Ringen Ri2 bis Ri5 bzw. Rin hervorrufen, die den leckagestromabwärts anschließenden Dichtspalt mit der größeren Dichtspalthöhe ausbilden.

Meist sind die besagten Ringe Ri1 bis Rin in ihrer Umfangsrichtung endlos. In manchen Fällen ist es aber besonders günstig, sie zu teilen, d. h. aus mehreren Ringbogenabschnitten aufzubauen, was hier nicht gesondert figürlich dargestellt ist. Eine solche Teilung kann derart ausgeführt sein, dass sie einen Austausch der die Buchse bildenden Bestandteile ermöglicht, für den es keines Ausbaus des Plungers bedarf.

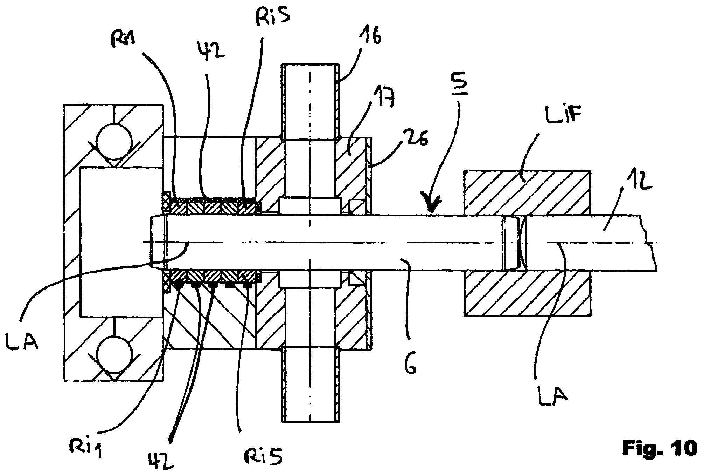

Die Fig. 10 zeigt ein viertes und zugleich ein fünftes Ausführungsbeispiel der Erfindung.

Das zuvor zum ersten bis dritten Ausführungsbeispiel Gesagte gilt hier sinngemäß, denn diese Ausführungsbeispiele sind technisch-funktional gesehen eine Kombination der zweiten und dritten Ausführungsbeispiele.

Die über der Mittellängsachse dargestellte Hälfte der Fig. 10 stellt das vierte Ausführungsbeispiel dar. Die Buchse 9 ist auch hier wieder mehrteilig ausgebildet und besteht vorzugsweise aus der genannten Zahl von Ringen Ri1 bis Rin. Jeder der Ringe ist nun aber an seiner Außenumfangsfläche derart elastisch gelagert, wie das oben im Rahmen des zweiten Ausführungsbeispiels beschrieben worden ist - etwa durch außenseitigen Verguss mit einer Elastomer-Masse oder Einvulkanisieren in einen in situ gebildeten Gummiring oder Einschieben in eine gemeinsame, als diskretes Bauteil ausgebildete Elastomer-Sleeve.

Auf diese Art und Weise ist jeder Ring - zumindest zu einem guten Teil - von den anderen Ringen unabhängig bewegbar. Somit lässt sich eine besonders gute Selbsteinstellung der Dichtspaltgeometrie verwirklichen.

Die unter der Mittellängsachse LA dargestellte Hälfte der Fig. 10 stellt das fünfte Ausführungsbeispiel dar.

Das Besondere ist hier, dass jeder Ring eine nur ihm allein zugeordnete Lagermanschette aufweist. Die Lagermanschette kann beispielsweise - bei Vorhandensein der notwendigen Nuten - als O-Ring, x-Ring oder auch anderweitiges Standardbauteil ausgeführt sein. Dabei besitzt der betreffende Ring beidseitig neben seiner Lagermanschette Freigang gegenüber dem Gehäuse. Auf diese Art und Weise lässt sich eine besonders hohe Beweglichkeit bzw. Selbsteinstellbarkeit der Buchse 9 erreichen.

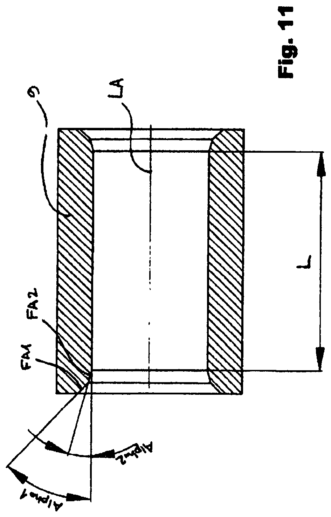

Die Fig. 11 zeigt schließlich eine Buchse 9 in detaillierter Ansicht. Gut zu erkennen ist hier die abgewinkelte Fase. Wie man sieht, besteht eine solche, hochdruckseitig angebrachte Fase auf ihrer der Hochdruckkammer zugewandten Seite aus einem ersten steileren Abschnitt FA1. Dieser schließt einen Fasenwinkel Alpha 1 von 45° oder etwa 45° zur Längsachse der Buchse ein. An diesen ersten Abschnitt schließt sich auf der dem Dichtspalt zugewandten Seite ein zweiter Fasenabschnitt FA2 mit einem flacheren Fasenwinkel Alpha 2 an. Der zweite Fasenabschnitt ist bevorzugt so eng, dass keine oder nur eine verringerte Anzahl von Feststoffpartikeln hier eindringen können. Das verringert die Belastung des Ringspalts mit Feststoffpartikeln.

Auch niederdruckseitig kann eine solche Fase angebracht sein.

### VERSCHIEDENES

Unabhängig von den bisher aufgestellten Ansprüchen wird als Option auch Schutz für einen Hochdruckhomogenisator nach Maßgabe des Hauptanspruchs, ggf. auch in Verbindung mit einem oder mehreren der Unteransprüche beansprucht, der keine den mindestens einen Plungerschaft umgebende Niederdruckkammer aufweist.

Darüber hinaus wird als Option auch Schutz für das mit den im Rahmen dieser Offenbarung beschriebenen Hochdruckhomogenisatoren unter Zuhilfenahme einer Plungerpumpe mit Ringspaltdichtung ausgeübte Verfahren beansprucht.

### BEZUGSZEICHENLISTE

- 1: Hochdruckhomogenisator
- 2: Hochdruckkammer
- 3: Homogenisiereinheit
- 4: Plungerpumpe
- 5: Plunger
- 6: Plungerschaft
- 7: Niederdruckkammer
- 8: Hochdruckdichtung
- 9: Buchse
- 10: Antriebsseitige Stirnseite der Buchse
- 11: Innenmantelfläche der Buchse
- 12: Antriebskolben
- 13: Kreuzgelenkkupplung
- 14: Antriebsseitige Stirnfläche des Plungers
- 15: Plungerseitige Stirnfläche des Antriebskolbens
- 16: Zu-/Ablauf zur Niederdruckkammer/ Leitungen
- 17: Niederdruckkammer umgebender Gehäuseteil
- 18: Hochdruckdichtung umgebender Gehäuseteil
- 19: Verbindungsleitung zwischen den Niederdruckkammern
- 20: Passstifte
- 21: Bohrungen für Befestigungsschrauben
- 22: Flachdichtung
- 23: Stirnseite des Plungers in Hochdruckkammer
- 24: Haltebuchse
- 25: Niederdruckdichtungsanordnung
- 26: Gehäusedeckel
- 27: Fixierschrauben an Gehäusedeckel
- 28: Produktvorratsbehälter
- 29: Förderpumpe
- 30: Einlassventil
- 31: Auslassventil
- 32: Hochdruckkammer umgebender Gehäuseteil (schematisch)
- 33: Produktauffangbehälter
- 34: Drehachsen bildende Schrauben der Kreuzgelenkkupplung
- 35: Plungerseitige Kupplungsteile
- 36: Zwischenstück Kupplung
- 37: Antriebskolbenseitige Kupplungsteile
- 38: Schrauben der Kreuzgelenkkupplung zum Aufbringen einer Klemmkraft
- 39: Aufnahmeöffnung in Kreuzgelenkkupplung
- 40: Schräge an Buchse
- 42: Lagermanschette
- L: Länge
- S: Ringspalthöhe Drosselspalt
- A-A: Schnittlinie
- B-B: Schnittlinie
- D-D: Schnittlinie
- r: Radius
- LA: Mittellängsachse
- Ri1-Rin: Ringe
- Alpha 1: Fasenwinkel
- Alpha 2: Fasenwinkel
- FA1: Erster Fasenabschnitt
- FA2: Zweiter Fasenabschnitt
- B: Balg
- F1: Verbindung
- F2: Verbindung

## Patentansprüche

1. Hochdruckhomogenisator (1) für mit Partikeln beladene fließfähige Stoffe mit einer Hochdruckkammer (2) und einer, dieser fluidisch nachgeschalteten Homogenisiereinheit (3), die das zu homogenisierende Fluid, das zuvor in der Hochdruckkammer (2) auf einen Druck von mehr als 500 bar gebracht worden ist, unter Verwirbelung des Fluids entspannt, und einer der Homogenisiereinheit (3) zugeordneten Plungerpumpe (4), deren Plunger (5) die Hochdruckkammer (2) unter Druck setzt, wobei der Hochdruckhomogenisator (1) eine den Plungerschaft (6) umgebende Niederdruckkammer (7) zur Kühlung des Plungers (5) besitzt, die einen Betriebsdruck von PN≤ 25 bar führt, wobei die Niederdruckkammer (7) und die Hochdruckkammer (2) durch eine vom Plunger (5) durchdrungene Dichtung (8) voneinander getrennt sind,
**dadurch gekennzeichnet, dass**
die Dichtung (8) ein Drosselspalt ist, der zwischen dem Plungerschaft (6) und einer den Plungerschaft (6) nicht berührenden Buchse (9) ausgebildet ist und für dessen Länge (L) und radiale Ringspalthöhe (S) gilt S/L ≤ 0,0015, dass
die Stirnseite der Buchse (9) auf ihrer der Hochdruckkammer (2) zugewandten Seite über eine Fase in die Innenmantelfläche der Buchse (9) übergeht und dass die Fase auf ihrer der Hochdruckkammer (2) zugewandten Seite aus einem ersten steileren Fasenabschnitt (FA1) besteht, der bevorzugt etwa einen Fasenwinkel (Alpha 1) von 45° zur Längsachse der Buchse (9) einschließt, an den sich auf der dem Dichtspalt zugewandten Seite ein zweiter Fasenabschnitt (FA2) mit einem flacheren Fasenwinkel (Alpha 2) anschließt, bevorzugt mit einem Fasenwinkel (Alpha 2) von 30° oder weniger.

2. Hochdruckhomogenisator (1) für fluide Stoffe nach Anspruch 1, **dadurch gekennzeichnet, dass** die zylindrische Länge (L) des Drosselspalts mindestens 2/3 des Durchmessers des Plungers (5) beträgt und idealerweise mindestens dem gesamten Durchmesser des Plungers (5) entspricht.

3. Hochdruckhomogenisator (1) für fluide Stoffe nach einem der vorhergehenden Ansprüche, **dadurch gekennzeichnet, dass** die Ringspalthöhe (S) des Drosselspalts maximal 0,03 mm beträgt.

4. Hochdruckhomogenisator (1) für fluide Stoffe nach einem der vorhergehenden Ansprüche, **dadurch gekennzeichnet, dass** die Buchse (9) und der Plunger (5) aus Materialien mit unterschiedlichen Wärmeausdehnungskoeffizienten bestehen.

5. Hochdruckhomogenisator (1) für fluide Stoffe nach einem der vorhergehenden Ansprüche, **dadurch gekennzeichnet, dass** der Plunger (5) aus keramischem Material besteht.

6. Hochdruckhomogenisator (1) für fluide Stoffe nach einem der vorhergehenden Ansprüche, **dadurch gekennzeichnet, dass** das Material der Buchse (9) weicher ist als das Material des Plungers (5).

7. Hochdruckhomogenisator (1) für fluide Stoffe nach einem der vorhergehenden Ansprüche, **dadurch gekennzeichnet, dass** der Plunger (5) so geführt ist, dass die Längsachsen der Buchse (9) und des sich in der Buchse (9) hin und her bewegenden Plungerschafts (6) durchgängig parallel oder vorzugsweise koaxial ausgerichtet sind, indem der Plunger (5) zugleich der Antriebskolben (12) ist oder indem der Antriebskolben (12) und der Plunger (5) in ihrem Verbindungsbereich gehäusefest geführt werden.

8. Hochdruckhomogenisator (1) für fluide Stoffe nach einem der vorhergehenden Ansprüche, **dadurch gekennzeichnet, dass** die Buchse (9) in radialer Richtung im Wesentlichen starr im sie umgebenden Gehäuseteil gehalten wird und der Plunger (5) über eine radialflexible Kupplung, die verhindert, dass Schwenkbewegungen vom Antriebskolben (12) auf den Plunger (5) übertragen werden, mit dem ihn antreibenden Antriebskolben (12) verbunden ist.

9. Hochdruckhomogenisator (1) für fluide Stoffe nach einem der vorhergehenden Ansprüche 1 bis 7 **dadurch gekennzeichnet, dass** die Buchse (9) in radialer Richtung mehr als nur unwesentlich beweglich im sie umgebenden Gehäuseteil gehalten wird und der Plunger (5) in radialer Richtung starr mit dem ihn antreibenden Antriebskolben (12) verbunden ist.

10. Hochdruckhomogenisator (1) für fluide Stoffe nach Anspruch 8, **dadurch gekennzeichnet, dass** die antriebsseitige Stirnseite (14) des Plungers (5) oder die die Antriebsdruckkräfte auf diese übertragende Stirnseite (15) des Antriebskolbens (12) konvex gekrümmt ist.

11. Hochdruckhomogenisator (1) für fluide Stoffe nach einem der vorhergehenden Ansprüche, **dadurch gekennzeichnet, dass** die Buchse (9) mehrteilig ausgebildet ist und aus mehreren, idealerweise drei, besser mindestens vier bis acht unmittelbar hintereinander und in unmittelbarem Kontakt miteinander eingebauten Ringen besteht.

12. Hochdruckhomogenisator (1) für fluide Stoffe nach einem der vorhergehenden Ansprüche, **dadurch gekennzeichnet, dass** entweder die unmittelbar an der Ausbildung des Dichtspalts beteiligte Buchse (9) als Ganze schwimmend gelagert ist, vorzugsweise indem an ihrem Außenumfang - zumindest abschnittweise, besser vollständig - eine Lagermanschette (42) aus mehr als nur unwesentlich kompressiblem Material vorgesehen ist, idealerweise aus einem Weichelastomer oder Gummi, oder dass die die Buchse (9) ausbildenden Ringe jeweils für sich schwimmend gelagert sind, vorzugsweise indem an ihrem Außenumfang - zumindest abschnittweise, besser vollständig - eine Lagermanschette (42) aus mehr als nur unwesentlich kompressiblem Material vorgesehen ist.

13. Hochdruckhomogenisator (1) für fluide Stoffe nach einem der vorhergehenden Ansprüche, **dadurch gekennzeichnet, dass** der Außenmantel der Buchse (9) ballig statt idealzylindrisch ist.

14. Verwendung eines Hochdruckhomogenisators (1) nach einem der vorhergehenden Ansprüche, derart, dass die Materialien der Buchse (9) und des Plungers (5) auf das zu homogenisierende Fluid, insbesondere auf dessen temperaturabhängige Viskosität und/oder auf die von dem Fluid geführten Partikel abgestimmt sind, derart, dass die durch eine Temperaturänderung im Dichtspaltbereich hervorgerufene Änderung der Spalthöhe (S) des Dichtspalts tendenziell einer noch weiteren Temperaturänderung mit gleichem Vorzeichen entgegenwirkt.

15. Verwendung eines Hochdruckhomogenisators (1) nach Anspruch 12 als Bestandteil eines Hochdruckhomogenisatorsystems, das aus einem solchen Hochdruckhomogenisator (1) besteht und einem Satz von Buchsen (9) aus unterschiedlichen Materialien, mittels derer der Verwender den Hochdruckhomogenisator (1) im Rahmen des bestimmungsgemäßen Betriebs so zurüsten kann, dass das thermische Änderungsverhalten der Spalthöhe (S) an das Fluid angepasst werden kann, das in der nächstfolgenden Charge oder Kampagne homogenisiert werden soll.

## Claims

1. High-pressure homogenizer (1) for particle-laden flowable substances, comprising a high-pressure chamber (2) and a homogenizing unit (3) fluidically downstream thereof, which relaxes the fluid to be homogenized, previously pressurized in the high-pressure chamber (2) to more than 500 bar, under turbulence, and a plunger pump (4) assigned to the homogenizing unit (3), whose plunger (5) pressurizes the high-pressure chamber (2), wherein the high-pressure homogenizer (1) comprises a low-pressure chamber (7) surrounding the plunger shaft (6) for cooling the plunger (5), carrying an operating pressure of PN ≤ 25 bar, and wherein the low-pressure chamber (7) and the high-pressure chamber (2) are separated by a seal (8) penetrated by the plunger (5),
**characterized in that**
the seal (8) is a throttle gap formed between the plunger shaft (6) and a sleeve (9) not contacting the plunger shaft (6), and for its length (L) and radial annular gap height (S) the condition S/L ≤ 0.0015 applies,
that the front face of the sleeve (9) on its side facing the high-pressure chamber (2) transitions via a chamfer into the inner cylindrical surface of the sleeve (9), and that the chamfer consists, on its side facing the high-pressure chamber (2), of a first steeper chamfer section (FA1), preferably having a chamfer angle (Alpha 1) of approximately 45° relative to the longitudinal axis of the sleeve (9), followed on the side facing the sealing gap by a second chamfer section (FA2) with a flatter chamfer angle (Alpha 2), preferably 30° or less.

2. High-pressure homogenizer (1) for fluid substances according to claim 1,
**characterized in that**
the cylindrical length (L) of the throttle gap is at least 2/3 of the diameter of the plunger (5) and ideally at least equals the full diameter of the plunger (5).

3. High-pressure homogenizer (1) for fluid substances according to one of the preceding claims,
**characterized in that**
the annular gap height (S) of the throttle gap is a maximum of 0.03 mm.

4. High-pressure homogenizer (1) for fluid substances according to one of the preceding claims,
**characterized in that**
the sleeve (9) and the plunger (5) consist of materials with different coefficients of thermal expansion.

5. High-pressure homogenizer (1) for fluid substances according to one of the preceding claims,
**characterized in that**
the plunger (5) is made of ceramic material.

6. High-pressure homogenizer (1) for fluid substances according to one of the preceding claims,
**characterized in that**
the material of the sleeve (9) is softer than that of the plunger (5).

7. High-pressure homogenizer (1) for fluid substances according to one of the preceding claims,
**characterized in that**
the plunger (5) is guided in such a way that the longitudinal axes of the sleeve (9) and the plunger shaft (6), which moves back and forth in the sleeve (9), are consistently parallel or preferably coaxial, either because the plunger (5) is also the drive piston (12), or because the drive piston (12) and the plunger (5) are fixed in their connection area to the housing.

8. High-pressure homogenizer (1) for fluid substances according to one of the preceding claims,
**characterized in that**
the sleeve (9) is held radially rigid in the surrounding housing part and the plunger (5) is connected to the driving drive piston (12) via a radially flexible coupling that prevents tilting movements from being transmitted from the drive piston (12) to the plunger (5).

9. High-pressure homogenizer (1) for fluid substances according to one of the preceding claims 1 to 7,
**characterized in that**
the sleeve (9) is held more than just insignificantly movable in the radial direction within the surrounding housing part and the plunger (5) is radially rigidly connected to the driving drive piston (12).

10. High-pressure homogenizer (1) for fluid substances according to claim 8, **characterized in that**
the drive-side front face (14) of the plunger (5) or the face (15) of the drive piston (12) transmitting the drive pressure forces to the plunger is convexly curved.

11. High-pressure homogenizer (1) for fluid substances according to one of the preceding claims,
**characterized in that**
the sleeve (9) is of multipart design and consists of several, ideally three, preferably at least four to eight, rings arranged in direct succession and direct contact with each other.

12. High-pressure homogenizer (1) for fluid substances according to one of the preceding claims,
**characterized in that**
either the sleeve (9) involved in forming the sealing gap is entirely float-mounted, preferably by having a bearing sleeve (42) - at least sectionwise partially, preferably entirely - and made of a more than just slightly compressible material on its outer surface ideally made of a soft elastomer or rubber, or that the individual rings forming the sleeve (9) are each float-mounted, preferably via a bearing sleeve (42) - at least sectionwise partially, preferably entirely -on their outer surface and made of a more than just slightly compressible material.

13. High-pressure homogenizer (1) for fluid substances according to one of the preceding claims,
**characterized in that**
the outer surface of the sleeve (9) is barrel-shaped instead of perfectly cylindrical.

14. Use of a high-pressure homogenizer (1) according to one of the preceding claims,
**characterized in that**
the materials of the sleeve (9) and the plunger (5) are selected based on the fluid to be homogenized, especially according to its temperature-dependent viscosity and/or the particles carried by the fluid, in such a way that a change in the gap height (S) of the sealing gap caused by a temperature change in the sealing area tends to counteract a further temperature change in the same direction.

15. Use of a high-pressure homogenizer (1) according to claim 12 as part of a high-pressure homogenizing system, consisting of such a high-pressure homogenizer (1) and a set of sleeves (9) made of different materials, enabling the user to equip the homogenizer (1) within its intended operation so that the thermal change behavior of the gap height (S) can be adapted to the fluid to be homogenized in the next batch or campaign.

## Revendications

1. Homogénéisateur haute pression (1) pour des substances fluides chargées de particules, comprenant une chambre haute pression (2) et une unité d'homogénéisation (3) disposée en aval de manière fluidique, laquelle détend le fluide à homogénéiser, préalablement porté à une pression de plus de 500 bar dans la chambre haute pression (2), sous turbulence, et une pompe à piston plongeur (4) associée à l'unité d'homogénéisation (3), dont le piston plongeur (5) met sous pression la chambre haute pression (2), l'homogénéisateur haute pression (1) comprenant une chambre basse pression (7) entourant l'arbre du plongeur (6) pour refroidir le plongeur (5), fonctionnant à une pression de service PN ≤ 25 bar, la chambre basse pression (7) et la chambre haute pression (2) étant séparées par un joint (8) traversé par le plongeur (5),
**caractérisé en ce que**
le joint (8) est un interstice d'étranglement formé entre l'arbre du plongeur (6) et une bague (9) qui ne touche pas l'arbre du plongeur (6), et que pour sa longueur (L) et sa hauteur radiale d'interstice annulaire (S), la condition suivante est remplie : S/L ≤ 0,0015,
que la face frontale de la bague (9), du côté tourné vers la chambre haute pression (2), passe par un chanfrein dans la surface intérieure de la bague (9), et que ce chanfrein comprend, du côté tourné vers la chambre haute pression (2), une première section de chanfrein plus raide (FA1), présentant de préférence un angle de chanfrein (Alpha 1) d'environ 45° par rapport à l'axe longitudinal de la bague (9), suivie, du côté tourné vers l'interstice d'étanchéité, d'une deuxième section de chanfrein (FA2) avec un angle de chanfrein plus faible (Alpha 2), de préférence inférieur ou égal à 30°.

2. Homogénéisateur haute pression (1) selon la revendication 1,
**caractérisé en ce que**
la longueur cylindrique (L) de l'interstice d'étranglement est au moins égale aux deux tiers du diamètre du plongeur (5) et, idéalement, au moins égale au diamètre total du plongeur (5).

3. Homogénéisateur haute pression (1) selon l'une des revendications précédentes,
**caractérisé en ce que**
la hauteur (S) de l'interstice annulaire de l'interstice d'étranglement ne dépasse pas 0,03 mm.

4. Homogénéisateur haute pression (1) selon l'une des revendications précédentes,
**caractérisé en ce que**
la bague (9) et le plongeur (5) sont fabriqués dans des matériaux ayant des coefficients de dilatation thermique différents.

5. Homogénéisateur haute pression (1) selon l'une des revendications précédentes,
**caractérisé en ce que**
le plongeur (5) est constitué d'un matériau céramique.

6. Homogénéisateur haute pression (1) selon l'une des revendications précédentes,
**caractérisé en ce que**
le matériau de la bague (9) est plus tendre que celui du plongeur (5).

7. Homogénéisateur haute pression (1) selon l'une des revendications précédentes,
**caractérisé en ce que**
le plongeur (5) est guidé de manière à ce que les axes longitudinaux de la bague (9) et de l'arbre du plongeur (6), qui effectue un mouvement de va-et-vient dans la bague (9), soient constamment parallèles ou, de préférence, coaxiaux, soit parce que le plongeur (5) est aussi le piston d'entraînement (12), soit parce que le piston d'entraînement (12) et le plongeur (5) sont guidés solidairement au boîtier dans leur zone de liaison.

8. Homogénéisateur haute pression (1) selon l'une des revendications précédentes,
**caractérisé en ce que**
la bague (9) est maintenue de manière essentiellement rigide en direction radiale dans la partie de boîtier environnante, et que le plongeur (5) est relié au piston d'entraînement (12) qui le commande au moyen d'un accouplement radialement flexible, empêchant la transmission de mouvements d'inclinaison du piston d'entraînement (12) vers le plongeur (5).

9. Homogénéisateur haute pression (1) selon l'une des revendications 1 à 7, **caractérisé en ce que**
la bague (9) est maintenue de manière plus que simplement insignificant mobile en direction radiale dans la partie de boîtier environnante, et que le plongeur (5) est relié de manière rigide en direction radiale au piston d'entraînement (12) qui le commande.

10. Homogénéisateur haute pression (1) selon la revendication 8,
**caractérisé en ce que**
la face frontale côté entraînement (14) du plongeur (5) ou la face (15) du piston d'entraînement (12) transmettant les forces de pression d'entraînement est de forme convexe.

11. Homogénéisateur haute pression (1) selon l'une des revendications précédentes,
**caractérisé en ce que**
la bague (9) est constituée de plusieurs pièces et comprend plusieurs anneaux montés directement les uns derrière les autres et en contact direct, idéalement trois, de préférence au moins quatre à huit.

12. Homogénéisateur haute pression (1) selon l'une des revendications précédentes,
**caractérisé en ce que**
soit la bague (9) participant directement à la formation de l'interstice d'étanchéité est montée flottante dans son ensemble, de préférence grâce à une bague de support (42) disposée sur son pourtour extérieur - au moins par sections, de préférence sur toute la circonférence - constituée d'un matériau plus qu'insignifiquement compressible, idéalement d'un élastomère souple ou de caoutchouc, soit les anneaux formant la bague (9) sont chacun montés flottants, de préférence par une bague de support (42) - au moins partiellement, de préférence sur toute la circonférence- en matériau compressible sur leur pourtour extérieur.

13. Homogénéisateur haute pression (1) selon l'une des revendications précédentes,
**caractérisé en ce que**
la surface extérieure de la bague (9) est bombée au lieu d'être parfaitement cylindrique.

14. Utilisation d'un homogénéisateur haute pression (1) selon l'une des revendications précédentes,
**caractérisée en ce que**
les matériaux de la bague (9) et du plongeur (5) sont adaptés au fluide à homogénéiser, notamment à sa viscosité dépendant de la température et/ou aux particules qu'il contient, de manière à ce que la variation de la hauteur de l'interstice (S) causée par un changement de température dans la zone de l'interstice tende à s'opposer à une nouvelle variation de température dans le même sens.

15. Utilisation d'un homogénéisateur haute pression (1) selon la revendication 12 comme composant d'un système d'homogénéisation haute pression,
**caractérisée en ce que**
le système comprend un tel homogénéisateur haute pression (1) et un jeu de bagues (9) en matériaux différents, permettant à l'utilisateur d'équiper l'homogénéisateur (1) selon les besoins, de manière à adapter le comportement thermique de variation de la hauteur de l'interstice (S) au fluide à homogénéiser dans le prochain lot ou campagne
